# EUROPÄISCHE PATENTANMELDUNG

(11) **EP 4 148 302 A1**
(43) Veröffentlichungstag der Anmeldung: **15.03.2023**
(21) Anmeldenummer: 22195019.9
(22) Anmeldetag: 12.09.2022
(51) Int. Cl.: F16H 61/452, B60K 17/356, F16H 61/456

(54) **VERFAHREN ZUR STEUERUNG EINES MEHRMOTOREN SYSTEMS**

(30) Priorität: 14.09.2021 DE 102021210154
(71) Anmelder: Robert Bosch GmbH, 70442 Stuttgart (DE)
(72) Erfinder: Oschmann, Sebastian, 89312 Guenzburg (DE); Hernandez Ladera, Paul Luis, 89275 Elchingen (DE)

(57) **Zusammenfassung**

Die vorliegende Erfindung betrifft ein Verfahren zur Steuerung eines Fahrantriebes (1) einer mobilen Arbeitsmaschine, wobei der Fahrantrieb mit einer Hydropumpe (2) zur Druckmittelversorgung mindestens vier mit einem Abtrieb (80) koppelbarer Hydromotoren (78) versehen ist, wobei in dem Fahrantrieb die mindestens vier Hydromotoren (78) wahlweise in einer seriellen Konfiguration, in einer parallelen Konfiguration, in einer seriellen-parallelen Konfiguration oder in einer Kombination von diesen Konfigurationen angeordnet werden können, wobei das Verfahren den folgenden Schritt umfasst:
a. Automatisch Umschalten mindestens teilweise von der parallelen Konfiguration in die serielle-parallele Konfiguration, wenn mindestens eine erfasste Information einen Wechsel von der parallelen Konfiguration in die serielle-parallele Konfiguration mindestens teilweise erfordert.

## Beschreibung

### STAND DER TECHNIK

Es sind hydrostatische Fahrantriebe für mobile Arbeitsmaschinen bekannt, bei denen eine Hydropumpe und mehrere Hydromotoren in einem geschlossenen hydraulischen Kreis miteinander verbunden sind. Die Hydropumpe wird von einem Verbrennungsmotor - z.B. einem Dieselmotor - angetrieben, und die Hydromotoren treiben schließlich die mobile Arbeitsmaschine - z.B. über ein jeweiliges Rad - an.

Die Hydropumpe derartiger Fahrantriebe ist oft in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Abtriebsdrehzahl der Hydromotoren bzw. der Räder - also eine Fahrgeschwindigkeit der mobilen Arbeitsmaschine - verstellt werden.

Hydrostatische Axialkolbenpumpen werden u.a. in Fahrantrieben von Baumaschinen eingesetzt. Diese Axialkolbenpumpen werden oft bei Mehrmotoren Fahrantriebe benutzt.

Hydraulische Mehrmotorenlösungen können entweder in einer seriellen Konfiguration oder in einer parallelen Konfiguration realisiert werden.

Die serielle Konfiguration bietet eine längere Übersetzung und feste Kopplung (Kopplung über Volumenstrom) von mehreren Motoren wodurch Schlupfeffekte bei niedriger Traktion bei einem Motor vermieden werden können.

Die parallele Kopplung von Motoren (Kopplung über Druck) bietet dagegen eine kürzere Übersetzung, gleichzeitig können auch unterschiedliche Drehzahlen ohne Kavitation/Druckanstieg zwischen den Motoren abgebildet werden (unterschiedliche Drehzahlen bei Kurvenfahrt). Allerdings kann es zu bei fehlender Traktion zu unkontrolliertem Schlupf an dem betreffenden Motor kommen (fehlende Zugkraft an anderen Motoren).

Um dieses Problem zu beheben hat die Anmelderin eine Patentanmeldung eingereicht DE 10 2021 210 154, von der die Priorität beansprucht wurde. In dieser Patentanmeldung wird ein automatisches Umschalten zwischen einer parallelen und einer seriellen Konfiguration ermöglicht, sodass wenn erkannt wird, dass eine bestimmte Situation einen Wechsel erfordert, dieser automatisch ausgeführt wird (z.B. beim Schlupfen eines Rades)

Es ist jedoch erwähnenswert, dass bei der Prüfung der Umschaltfunktionen zwischen den Betriebsarten (Parallel- und Serienbetrieb) der Hydraulikmotoren einige Probleme festgestellt wurden.

Beim Bergauffahren schaltet der in DE 10 2021 210 154 offenbarte Fahrantrieb auf Parallelbetrieb, um mehr Zugkraft zu erhalten. Wenn jedoch ein Rad durchdreht, schaltet das System auf Serienbetrieb um. Dies führt zu einer geringeren Zugkraft.

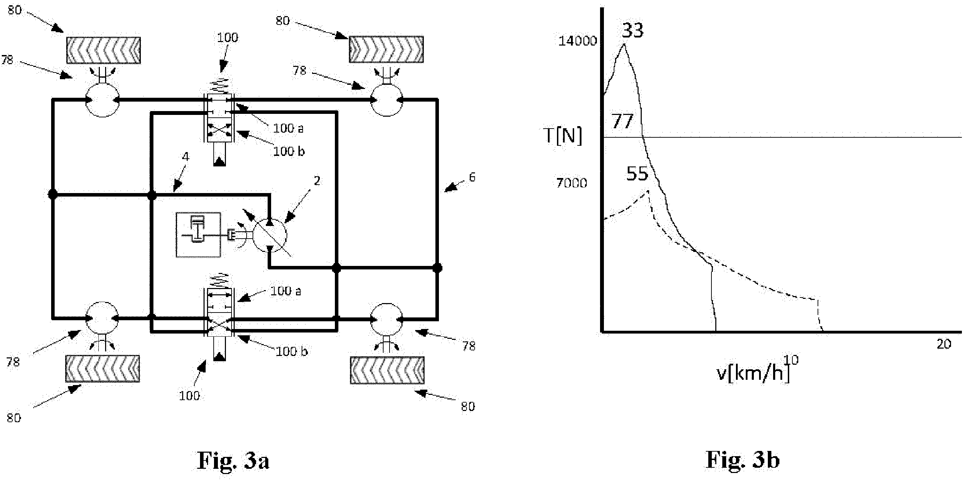

Figur 3b zeigt einen Verlauf einer Zugkraft in dem Parallelbetrieb (kontinuierliche Linie) und Serienbetrieb (gestrichelte Linie). Zum Beispiel, wie auf der Figur 3b zu sehen ist, wenn das Rad durchdreht (Schlupfen), schaltet das System auf Serienbetrieb um, und die Zugkraft würde bei voller Leistung von Punkt 33 auf Punkt 55 absinken. Dies führt dazu, dass die Maschine keine ausreichende Zugkraft mehr hat und stehen bleibt. Dies wäre für verschiedene Situationen nicht akzeptabel.

Demgegenüber liegt der Erfindung die Aufgabe zugrunde, ein Verfahren herzustellen, das die oben genannten Nachteile beseitigt.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Fig. 1 zeigt einen hydraulischen Schaltplan eines hydrostatischen Fahrantriebes gemäß dem Stand der Technik,
Fig. 2 zeigt einen hydraulischen Schaltplan eines hydrostatischen Fahrantriebes gemäß DE 10 2021 210 154.
Fig. 3a zeigt einen hydraulischen Schaltplan eines hydrostatischen Fahrantriebes gemäß einem Ausführungsbeispiel der vorliegenden Erfindung;
Fig. 3b zeigt einen Verlauf einer Zugkraft in dem Parallelbetrieb (kontinuierliche Linie) und Serienbetrieb (gestrichelte Linie) gemäß dem Stand der Technik;
Fig. 4 zeigt einen weiteren hydraulischen Schaltplan eines hydrostatischen Fahrantriebes gemäß einem weiteren Ausführungsbeispiel der vorliegenden Erfindung;
Fig. 5a und 5b zeigen zwei weitere hydraulische Schaltpläne eines hydrostatischen Fahrantriebes gemäß einem weiteren Ausführungsbeispiel der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

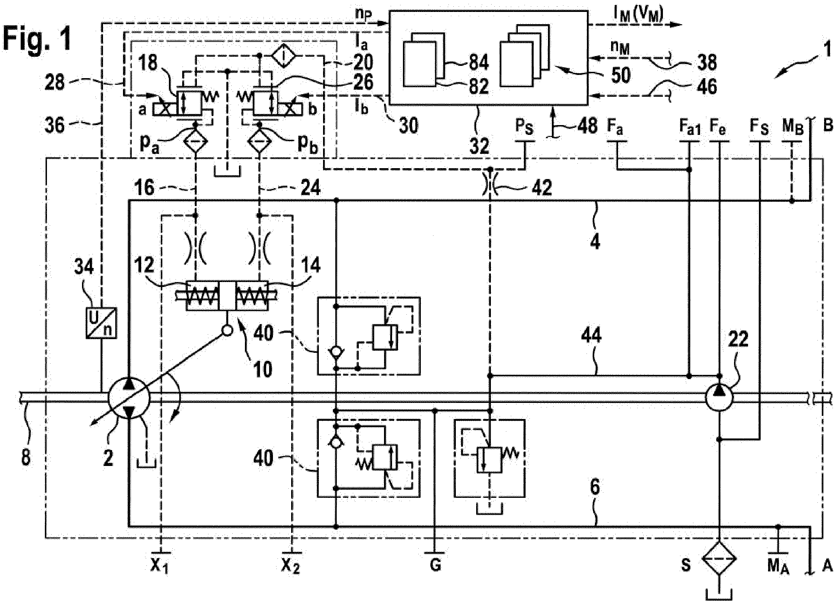

Gemäß Figur 1 hat ein hydrostatischer Fahrantrieb 1 eine Hydropumpe 2, die in geschlossenem hydraulischem Kreislauf über die Arbeitsleitungen 4 und 6 mit mindestens einem nicht in Figur 1 dargestellten Hydromotor zu dessen Druckmittelversorgung fluidisch verbunden ist. Dabei ist die Hydropumpe 2 mit einer Antriebsmaschine (nicht dargestellt) über eine Triebwelle 8 zur Übertragung eines Drehmoments gekoppelt. Die Kopplung ist dabei nicht übersetzt, so dass die Drehzahl der Antriebsmaschine und der Hydropumpe 2 identisch sind.

Die Hydropumpe 2 ist als Axialkolbenpumpe in Schrägscheibenbauweise ausgestaltet und kann in beiden Drehrichtungen und sowohl im Pumpen- als auch im Motorbetrieb betrieben werden. Sie hat ein verstellbares Verdrängungsvolumen V_{P} und eine als doppeltwirkender Hydrozylinder ausgestaltete Verstelleinrichtung 10.

Der Hydrozylinder 10 hat eine erste Zylinderkammer 12 und eine der ersten entgegenwirkende, zweite Zylinderkammer 14. Die erste Zylinderkammer 12 ist über eine erste Stelldruckleitung 16 mit dem Ausgang eines ersten Druckreduzierventils 18 verbunden. Letztgenanntes ist an eine Steuerdruckleitung 20 angeschlossen, die über einen Steuerdruckanschluss pₛ und über eine Speisepumpe 22, die auf der gleichen Triebwelle 8 wie die Hydropumpe 2 sitzt, mit Steuerdruckmittel versorgbar ist.

In gleicher Weise ist die zweite Zylinderkammer 14 über eine zweite Stelldruckleitung 24 mit einem zweiten Druckreduzierventil 26 verbunden, welches an die Steuerdruckleitung 20 angeschlossen ist. Die Druckreduzierventile 18, 26 sind elektromagnetisch betätigbar, wobei der jeweils in der Stelldruckleitung 16 bzw. 24 resultierende Stelldruck pₐ bzw. p_{b} gemäß einer Ventilkennlinie proportional zu einem Ansteuerstrom lₐ bzw. l_{b} des Elektromagnets a bzw. b ist. Über die elektromagnetische Betätigung der Druckreduzierventile 18, 26 können somit über die Vorgabe der Ansteuerströme lₐ, l_{b} die Stelldrücke pₐ, p_{b} der Zylinderkammern 12, 14 gesteuert werden. Zu diesem Zweck sind die Elektromagnete a, b der Druckreduzierventile 18, 26 über eine jeweilige Signalleitung 28 bzw. 30 mit einer elektronischen Steuereinheit 32 signalverbunden.

Des Weiteren hat der hydrostatische Fahrantrieb 1 eine Drehzahlerfassungseinheit 34, über die eine Drehzahl np der Hydropumpe 2 erfassbar und über eine Signalleitung 36 an die elektronische Steuereinheit 32 übermittelbar ist. Ebenso hat der Fahrantrieb 1 eine Drehzahlerfassungseinheit (nicht dargestellt), über die die Drehzahl n_{M} des Hydromotors erfassbar und über die Signalleitung 38 an die elektronische Steuereinheit 32 übermittelbar ist.

Zur sicherheitsrelevanten Druckabsicherung der Arbeitsleitungen 4, 6 gegen Überlast hat der hydrostatische Fahrantrieb 1 jeweils ein Druckbegrenzungsventil 40, das mit der jeweiligen Arbeitsleitung 4, 6 verbunden ist. Beide Druckbegrenzungsventile 40 sind mit ihren Ausgängen an eine Speisedruckleitung 44 angeschlossen, die mit der Speisepumpe 22 verbunden ist. Die Speisedruckleitung 44 ist über eine Drossel 42 mit der Steuerdruckleitung 20 fluidisch verbunden. Im Falle des Ansprechens der Druckbegrenzungsventile wird somit Druckmittel in die Speisedruckleitung 44 entspannt, wodurch energetische Verluste geringer sind, als wenn die Entspannung zum Tank T hin geschähe. Die Druckbegrenzungsventile 40 weisen jeweils eine Speise- oder Nachsaugfunktion in Form eines Rückschlagventils auf.

Der hydrostatische Fahrantrieb 1 kann sowohl im Zugbetrieb als auch im Schlepp- oder Bremsbetrieb betrieben werden. Im Zugbetrieb arbeitet die Hydropumpe 2 im Pumpenbetrieb, im Bremsbetrieb arbeitet sie im Motorbetrieb. Zudem ist die Hydropumpe 2 reversierbar, das heißt, ihr Verdrängungsvolumen V_{P} ist über die Verstelleinrichtung 10 beidseitig einer Neutralstellung mit Nullvolumen V_{P} = 0 verstellbar. Dadurch ist bei gleichbleibender Drehrichtung der Triebwelle 8 und der Antriebsmaschine (Dieselmotor) eine Fahrtrichtungsumkehr möglich.

Die elektronische Steuereinheit 32 ist über eine Signalleitung 46 mit einer Bedienerschnittstelle in Form eines Fahrpedals (nicht dargestellt) verbunden. Über das Fahrpedal wird dabei von einem Fahrer eine Geschwindigkeitsanforderung an die elektronische Steuereinheit 32 übermittelt. Diese kann sowohl die Rückwärtsfahrt als auch die Vorwärtsfahrt betreffen. Wird das Fahrpedal betätigt, so entspricht das dem Zug- oder Pumpenbetrieb der Hydropumpe 2, wird das Fahrpedal hingegen zurückgenommen, entspricht dies dem Brems- oder Motorbetrieb der Hydropumpe 2. Auch die Betätigung einer Fahrbremse (nicht dargestellt) entspricht dem Brems- oder Motorbetrieb der Hydropumpe 2.

Die Steuereinheit ist derart ausgestaltet, dass sie anhand der genannten Betätigung den entsprechenden Betrieb ermitteln kann. Zur Auswahl einer Fahrtrichtung weist der hydrostatische Fahrantrieb 1 zudem einen betätigbaren Fahrtrichtungsschalter (nicht dargestellt) auf, der über eine Signalleitung 48 mit der elektronischen Steuereinheit 32 signalverbunden ist. In Abhängigkeit seiner Stellung erfolgt die Ansteuerung der Hydropumpe 2 in ihrem reversierten oder nicht reversierten Verstellbereich, also diesseits oder jenseits der Neutralstellung des Hubvolumens der Hydropumpe 2.

Die Hydropumpe 2 ist derart ausgestaltet, dass der Druck p, der in den hochdruckführenden Arbeitsleitungen 4, 6 ansteht, dem dann wirksamen Stelldruck pₐ oder p_{b} entgegenwirkt und in Richtung seiner eigenen Verringerung wirksam ist. Hierzu weist die Hydropumpe 2 eine konstruktiv realisierte Regelschleife auf.

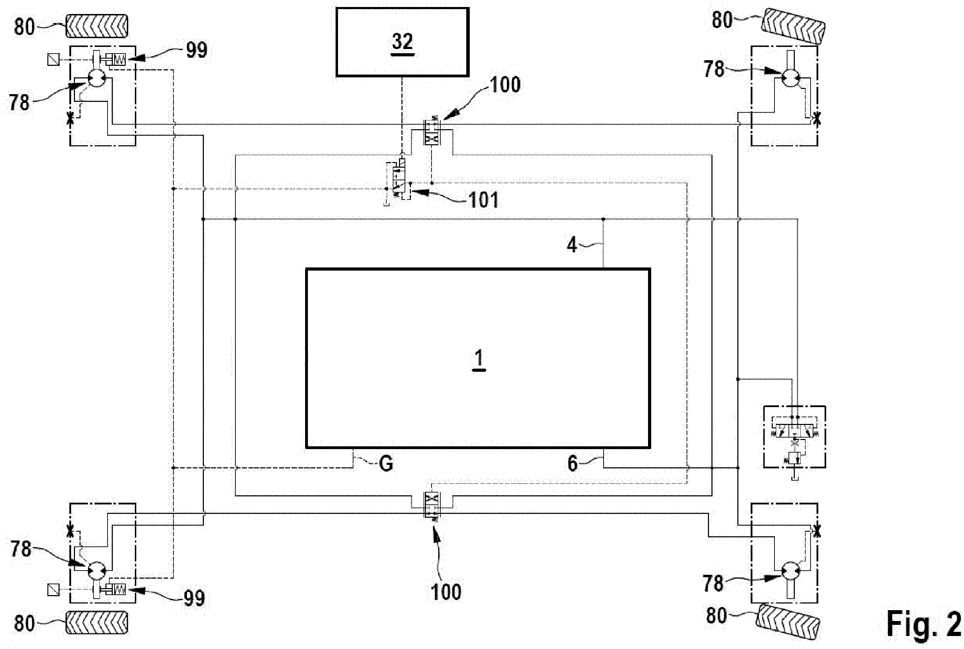

Der Fahrantrieb von Figur 1 ist aus dem Stand der Technik bekannt. Wie in Figur 2 dargestellt ist, wird die Hydropumpe 2 mit einer Mehrzahl von Hydromotoren 78, die ein konstantes Hubvolumen haben, hydraulisch verbunden. In der dargestellten Ausführungsform ist die Mehrzahl von Hydromotoren 78 an jeweils verschiedenen Rädern 80 der Arbeitsmaschine angeordnet. Jeder Hydromotor 78 ist konfiguriert, eine Drehbewegung an das jeweilige Rad 80 der Arbeitsmaschine zu übertragen. In diesem Beispiel hat die Arbeitsmaschine vier Räder und deshalb ist die Zahl der Hydromotoren 78 gleich vier. Allerdings kann die vorliegende Erfindung bei einer Arbeitsmaschine mir einer anderen Anzahl von Rädern angewendet werden.

Die Arbeitsleitung 4 ist direkt mit den zwei vorderen Hydromotoren verbunden und kann über zwei Verteilungsventile 100 mit den hinteren Hydromotoren verbunden werden. Die Verteilungsventile 100 haben jeweils zwei Steuerpositionen und jedes Verteilungsventil 100 kann zwischen diesen zwei Positionen umschalten. Jedes Proportionalventil 100 ist für die Steuerung der Verbindung der Hydromotoren auf einer Seite der Arbeitsmaschine zuständig.

In einer ersten Position 100a ermöglichen die Verteilungsventile 100, dass die Arbeitsleitung 4 nur mit den vorderen Hydromotoren 78 hydraulisch verbunden ist. Die Verteilungsventile 100 verhindern in der dargestellten Position die Verbindung mit der Arbeitsleitung 4. In diesem Zustand sind deswegen die vorderen Hydromotoren 78 parallel angeordnet und die hinteren Hydromotoren sind seriell mit dem jeweiligen vorderen Hydromotor hydraulisch verbunden. Mit "seriell" ist gemeint, dass ein Hydromotor stromabwärts eines anderen Hydromotors angeordnet ist, sodass der gleiche Volumenstrom durch die zwei Hydromotoren fließt. Dieser Volumenstrom wird dann von den hinteren Hydromotoren in die Arbeitsleitung 6 wieder zugeführt, sodass die Hydropumpe 2 diesen Volumenstrom wieder mit Druck beaufschlagen kann.

In einer zweiten Position 100b wird das Verteilungsventil 100 eine hydraulische Verbindung zwischen der Arbeitsleitung 4 und den hinteren Hydromotoren 78 ermöglichen. Darüber hinaus wird das Verteilungsventil 100 in dieser Position die serielle Verbindung zwischen dem vorderen und dem hinteren Hydromotor 78 unterbrechen. Insbesondere wird der Abfluss von dem vorderen Motor direkt in die Arbeitsleitung 6 zugeführt. In diesem Zustand sind deswegen alle Hydromotoren 78 in der parallelen Konfiguration angeordnet.

Zwischen der ersten und der zweiten Position können beliebige Positionen des Verteilungsventils 100 angefahren werden, sodass ein Teil des Volumenstroms, der aus der Arbeitsleitung 4 fließt, seriell durch einen vorderen und einen hinteren Hydromotor 78 fließen wird und ein Teil des Volumenstroms parallel an den vorderen und an den hinteren Hydromotor zur Verfügung gestellt wird.

In dieser Ausführungsform ist die Position (zwischen den beschriebenen ersten und zweiten Positionen) von jedem Verteilungsventil 100 mit einem Steuerdruck geregelt, der aus einem Druckreduzierventil 101 zugeschickt wird. Das Druckreduzierventil 101 kann auf Basis eines Steuerstroms den Steuerdruck, der für die Position (bzw. die Stellung) der Proportionalventile 100 zuständig ist, kontinuierlich regeln. Aus diesem Grund ist das Ventil 101 mit der Steuereinheit 32 signalverbunden, sodass die Steuereinheit 32 indirekt eine Position der Proportionalventile regeln kann. In diesem Beispiel wird der Steuerdruck, der zu dem Verteilungsventil 100 fließt, von der Speisepumpe 22 geliefert. Insbesondere ist an dem Anschluss G, der in Figur 1 dargestellt ist, der gleiche Druck der Speisedruckleitung 44 vorhanden. Der gleiche Druck wird in diesem Ausführungsbeispiel benutzt, um die Vorderbremse 99 der Vorderräder 80 zu steuern. Es ist dem Fachmann aber klar, dass der Steuerdruck aus einer anderen beliebigen Druckquelle kommen kann und dass diese Erfindung nicht auf dieses besondere Beispiel begrenzt ist.

Figur 3a zeigt einen hydraulischen Schaltplan eines hydrostatischen Fahrantriebes gemäß einem Ausführungsbeispiel der vorliegenden Erfindung. In diesem Beispiel sind die zwei Verteilungsventile 100 hydraulisch direkt mit einem Steuerdruck geregelt. Alternativ können die Verteilungsventile 100 direkt mit einem Steuerstrom geregelt werden. Darüber hinaus, wie in Figur 2 dargestellt ist, können zwei Druckreduzierventile 101 angeordnet werden, um unabhängig voneinander den Steuerdruck für die zwei Verteilungsventile 10 zu regeln.

In den nächsten Abschnitten wird das Verfahren zur Steuerung von dem in Figur 3a dargestellten Schaltplan erläutert.

Wie in der Einleitung erklärt wurde, schaltet das aktuelle in Figur 2 dargestellte System beim Bergauffahren auf die Parallelkonfiguration (Position 100b von dem Verteilungsventil 100) um, um mehr Traktion zu erhalten. Wenn jedoch ein Rad durchrutscht (beim Schlupfen), schaltet das System automatisch in die serielle Konfiguration um (Position 100a von dem Verteilungsventil 100), so dass dieses Rad nicht im Leerlauf läuft und der Systemdruck nicht schlagartig abgesenkt wird. Dies führt zu einer geringeren Zugkraft, wie in der Figur 3b zu sehen ist. Zum Beispiel würde die Zugkraft bei voller Leistung von Punkt 33 (in der parallelen Konfiguration) auf Punkt 55 (in der seriellen Konfiguration) abfallen. Dies führt dazu, dass die Maschine nicht mehr genügend Zugkraft hat, um bergauf zu fahren und schließlich stehen bleibt.

Die in DE 10 2021 210 154 beschriebene Lösung sieht den Betrieb der Hydromotoren in Parallel- oder Reihenschaltung vor. Im Falle des beschriebenen Falles bedeutet dies, dass das Fahrzeug im Parallelbetrieb das Drehmoment aller vier Hydromotoren hätte, während es im Serienbetrieb nur das Drehmoment von nur zwei Hydromotoren hätte. Aus diesem Grund ist in Figur 3b zu erkennen, dass der Punkt 55 nur die Hälfte der Zugkraft von Punkt 33 hat.

Ziel der Erfindung ist es, die derzeitige Lösung zu verbessern, indem eine bisher nicht vorgesehene Fahrstrategie verwendet wird, um die Zugkraft der Maschine in Situationen wie oben beschrieben zu erhöhen.

Die Idee ist, in diesem Fall nur die Seite mit dem durchdrehenden Rad auf Serienbetrieb automatisch umzuschalten und nicht das gesamte System, wie bei der in DE 10 2021 210 154 offenbarten Lösung. Das Ziel wird erreicht, indem eine Differentialsperre (andere Steuerung der zwei Verteilungsventilen) auf der Seite verwendet wird, auf der das Rad durchdreht (Schlupfen). Bei dieser Lösung wird die Zugkraft durch den Einsatz von drei statt zwei Hydromotoren erhöht, so dass es möglich wäre, bergauf weiterzufahren.

Wie in Figur 3b dargestellt ist, liegt der Punkt 77 (bei Einsatz von drei Hydromotoren) über dem Punkt 55 (im Serienbetrieb). Der Punkt 77 würde theoretisch lediglich den Durchschnitt der Zugkraft zwischen den Punkten 33 und 55 darstellen.

Nach einer Ausführungsform der vorliegenden Erfindung wird mindestens ein Vorderrad 80 und mindestens ein Hinterrad 80 mit einem Drehzahlsensor angeordnet, und wobei aus der Drehzahl der verschiedenen Räder 80 ein Schlupfzustand (Durchdrehen eines Rades) ermittelt wird, sodass das automatische Umschalten ausgeführt werden kann.

Alternativ wird gemäß einem weiteren Ausführungsbeispiel der vorliegenden Erfindung die Möglichkeit gegeben den Schlupfzustand anhand des Speisedrucks zu bestimmen. Der Grund ist, dass ein niedrigerer Druck auf eine mögliche Schlupfsituation hindeuten kann. Wenn erkannt wird, dass Schlupfen gerade passiert oder sehr wahrscheinlich passieren wird (bei einem niedrigen Druckwert des Speisedruckes), kann das automatische Umschalten ausgeführt werden.

Mit der vorgeschlagenen Lösung wird es auch möglich sein, das Kurvenverhalten zu verbessern. Um dies zu erreichen, kann das Verteilungsventil 100 auf der linken oder rechten Seite automatisch proportional angesteuert werden, je nachdem, in welche Richtung der Fahrer abbiegen möchte, und bietet somit eine Lenkunterstützung auf Wunsch des Fahrers. Die Ansteuerung der Ventile bewirkt eine Veränderung der Antriebsmomente zwischen der linken und der rechten Seite und somit eine zusätzliche Lenkkraft.

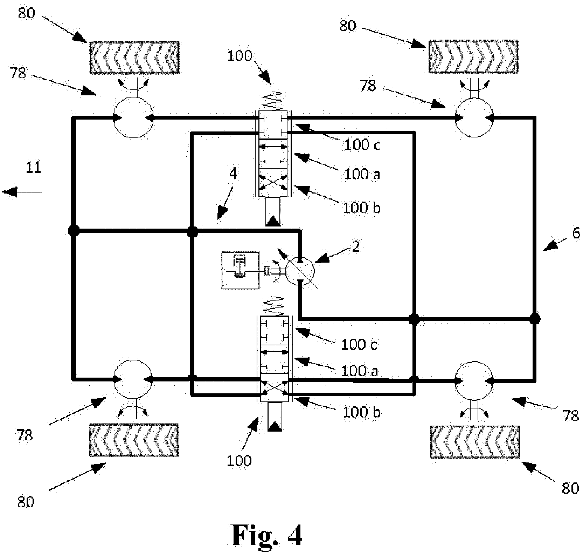

Eine Erweiterung der vorliegenden Erfindung kann durch eine geringfügige Änderung der Verteilungsventile vorgenommen werden, indem eine Steuerposition 100c hinzugefügt wird, die in der Figur 4 dargestellt ist, die es dem Fahrzeug ermöglicht, relativ enge Kurven zu fahren, so dass die Kurve nur um ein Rad herum verläuft.

Figur 4 zeigt die bereits erwähnte Hinzufügung der neuen Steuerposition 100c des Verteilungsventils. Im Beispiel der Abbildung würde das Fahrzeug nach rechts R abbiegen (die Fahrtrichtung ist mit dem Pfeil 11 dargestellt). Die Stellung des linken Verteilungsventils 100 kann so gesteuert werden, dass die linken Motoren parallel oder in Reihe geschaltet sind. Selbstverständlich würde im Parallelbetrieb eine stärkere Lenkunterstützung beim Abbiegen nach rechts oder links erfolgen.

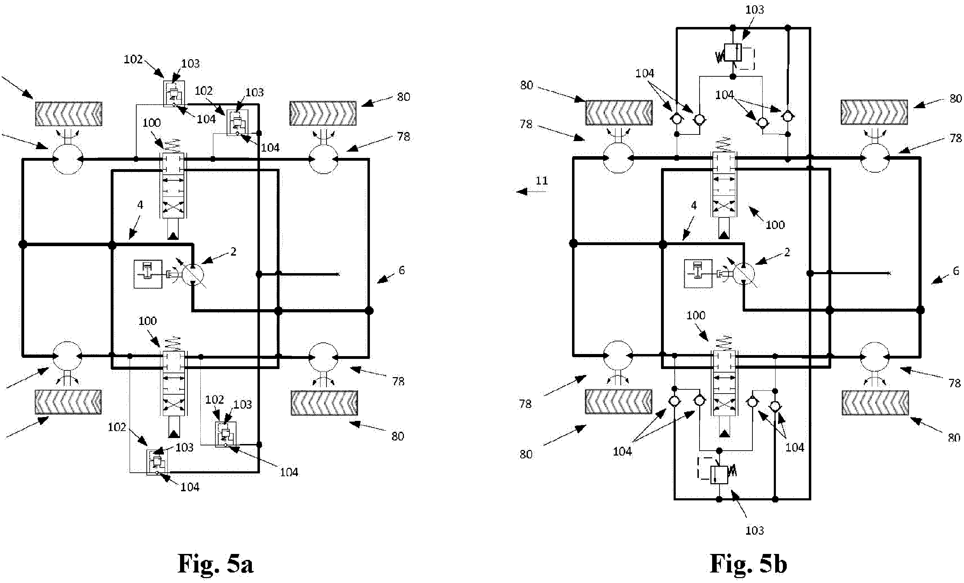

Weiterhin kann das mit der neuen Steuerposition 100c geänderte Verteilungsventil zur Verringerung der Leckage im Stillstand dienen und somit kann die Hangabrollgeschwindigkeit verringert werden. Dies ist der Fall, wenn beide Ventile (links und rechts) geschlossen sind, wie in Figur 5a dargestellt.

Auch mit der oben erwähnten Modifikation 100c des Verteilungsventils 100 wäre es möglich, das Fahrzeug hydrostatisch zu bremsen (eine Art Hochleistungsbremse). Figur 5 zeigt die Variante, bei der das Verteilerventil 100 auf beiden Seiten (rechts und links) geschlossen ist, so dass beide der oben genannten Aufgaben durchgeführt werden können.

In Figur 5a ist auch das System mit variablen Druckbegrenzungsventilen 103 und Nachsaugventilen, in Form von Rückschlagventilen 104, dargestellt. Beide Ventile sind in einer Baugruppe 102 kombiniert.

Die Druckbegrenzungsventile 103 sind nicht nur für die genannten neuen Aufgaben, sondern auch für die bestehenden relevant, um Überdruck in den Zwischenleitungen zwischen Vorder- und Hinterrad bei verschiedenen Einsatzfällen, insbesondere bei der seriellen Konfiguration, zu vermeiden.

Das Gleiche gilt für die Nachsaugventile 104. Das derzeitige System sieht diese nicht vor, so dass es verschiedene Situationen gibt, in denen die Zwischenleitungen zwischen den Vorder- und Hinterrädern kavitieren können. Durch die Nachsaugventile wird das Risiko von Kavitation daher verringert.

Es ist deswegen dem Fachmann klar, dass sowohl die Nachsaugventile 104 als auch die Druckbegrenzungsventile 103 unabhängig von der Form von den Verteilungsventilen 100 vorteilhaft benutzt werden können.

Für das hydrostatische Bremsen, wie in Figur 5a dargestellt ist, müssen die Druckbegrenzungsventile 103 variabel sein (z. B. elektronisch gesteuert), um eine kontrollierbare Hochleistungsbremsung zu ermöglichen und auch bei einem Stromausfall während der Fahrt ein abruptes Abbremsen zu vermeiden und ein Weiterrollen des Fahrzeugs zu ermöglichen, während es vorschriftsmäßig gebremst wird. Durch diese Lösung wird vorteilhaft der Öffnungsdruck des variablen Druckbegrenzungsventils 103 unter Berücksichtigung eines Bremsbefehls der Arbeitsmaschine geregelt.

Die Figur 5b zeigt eine Variante mit nur einem Druckbegrenzungsventil 103 pro Seite und Rückschlagventil 104. Mit dieser Ausführung kann die Anzahl an notwendigen verstellbaren Druckbegrenzungsventilen 103 der in Figur 5a dargestellten Variante reduziert werden. Durch diese Lösung können die Kosten tatsächlich reduziert werden.

Zusammengefasst, beschreibt die vorliegende Erfindung ein Verfahren zur Steuerung des Fahrantriebes 1 einer mobilen Arbeitsmaschine, wobei der Fahrantrieb mit einer Hydropumpe 2 zur Druckmittelversorgung von mindestens vier mit einem Abtrieb 80 koppelbaren Hydromotoren 78 versehen ist, wobei mindestens zwei Hydromotoren an einer ersten Seite der Arbeitsmaschine und mindestens zwei Hydromotoren an einer zweiten Seite der Arbeitsmaschine angeordnet sind, wobei die mindestens vier Hydromotoren jeweils an verschiedenen Rädern 80 der Arbeitsmaschine angeordnet sind, und wobei jeder Hydromotor konfiguriert ist, eine Drehbewegung an das jeweilige Rad zu übertragen. In dem Fahrantrieb können die mindestens vier Hydromotoren 78 wahlweise in einer seriellen Konfiguration, in einer parallelen Konfiguration, in einer seriellen-parallelen Konfiguration oder in einer Kombination von diesen Konfigurationen angeordnet werden , wobei in der seriellen Konfiguration zwei Hydromotoren der mindestens vier Hydromotoren 78 stromabwärts von jeweils einem anderen Hydromotor der mindestens vier Hydromotoren 78 angeordnet sind, wobei in der parallelen Konfiguration die mindestens vier Hydromotoren 78 mit dem gleichen durch die Hydropumpe 2 erzeugten Druck p versorgt sind, wobei in der seriellen-parallelen Konfiguration drei der mindestens vier Hydromotoren 78 mit dem gleichen durch die Hydropumpe 2 erzeugten Druck p versorgt sind und ein vierter Hydromotor der mindestens vier Hydromotoren 78 stromabwärts von einem anderen Hydromotor der mindestens vier Hydromotoren 78 angeordnet ist.

Der Kern des Verfahrens liegt darin, dass mindestens teilweise automatisch von der parallelen Konfiguration in die serielle-parallele Konfiguration umgeschaltet wird, wenn mindestens eine erfasste Information einen Wechsel von der parallelen Konfiguration in die serielle-parallele Konfiguration mindestens teilweise erfordert.

Diese Information kann sehr unterschiedlich sein und diese Erfindung ist nicht auf eine bestimme Art von Information begrenzt.

Eine erste Information kann die aktuelle Geschwindigkeit oder die aktuelle Beschleunigung der Arbeitsmaschine oder der Räder der Arbeitsmaschine sein, oder eine Größe von diesen abhängig. Wie schon in dem Verlauf der Beschreibung erläutert wird, wenn erfasst wird, dass Schlupfen gerade passiert oder sehr wahrscheinlich passieren wird, wird automatisch ein Wechsel von der parallelen Konfiguration oder von der seriellen Konfiguration in die serielle-parallele Konfiguration mindestens teilweise ausgeführt.

Eine zweite Information kann ein Lenkwinkel der Arbeitsmaschine 1 sein. In diesem Fall, wenn erfasst wird, dass der Lenkwinkel einen vorgegebenen Wert überschritten hat, um zu hohe Drücke zu verhindern und um das Abbiegen zu unterstützen, wird automatisch ein Wechsel von der parallelen Konfiguration oder von der seriellen Konfiguration in die serielle-parallele Konfiguration mindestens teilweise ausgeführt.

Das in dieser Erfindung beschriebene Verfahren wird durch die Steuereinheit 32 ausgeführt, z.B. mit Hilfe eines Computerprogramms, das auf einem maschinenlesbaren Speichermedium gespeichert ist.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Steuerung eines Fahrantriebes (1) einer mobilen Arbeitsmaschine, wobei der Fahrantrieb mit einer Hydropumpe (2) zur Druckmittelversorgung von mindestens vier mit einem Abtrieb (80) koppelbaren Hydromotoren (78) des Fahrantriebes (1) versehen ist, wobei mindestens zwei Hydromotoren an einer ersten Seite der Arbeitsmaschine und mindestens zwei Hydromotoren an einer zweiten Seite der Arbeitsmaschine angeordnet sind, wobei die mindestens vier Hydromotoren jeweils an verschiedenen Rädern (80) der Arbeitsmaschine angeordnet sind, und wobei jeder Hydromotor konfiguriert ist, eine Drehbewegung an das jeweilige Rad zu übertragen, wobei in dem Fahrantrieb die mindestens vier Hydromotoren (78) wahlweise in einer seriellen Konfiguration, in einer parallelen Konfiguration, in einer seriellen-parallelen Konfiguration oder in einer Kombination von diesen Konfigurationen angeordnet werden können, wobei in der seriellen Konfiguration zwei Hydromotoren der mindestens vier Hydromotoren (78) stromabwärts von jeweils einem anderen Hydromotor der mindestens vier Hydromotoren (78) angeordnet sind, wobei in der parallelen Konfiguration die mindestens vier Hydromotoren (78) mit dem gleichen durch die Hydropumpe (2) erzeugten Druck (p) versorgt sind, wobei in der seriellen-parallelen Konfiguration drei der mindestens vier Hydromotoren (78) mit dem gleichen durch die Hydropumpe (2) erzeugten Druck (p) versorgt sind und ein vierter Hydromotor der mindestens vier Hydromotoren (78) stromabwärts von einem anderen Hydromotor der mindestens vier Hydromotoren (78) angeordnet ist;
wobei das Verfahren den folgenden Schritt umfasst:
a. Automatisches Umschalten mindestens teilweise von der parallelen Konfiguration in die serielle-parallele Konfiguration, wenn mindestens eine erfasste Information einen Wechsel von der parallelen Konfiguration in die serielle-parallele Konfiguration mindestens teilweise erfordert.

2. Verfahren nach Anspruch 1, wobei mindestens ein Vorderrad (80) und mindestens ein Hinterrad (80) mit einem Drehzahlsensor angeordnet sind, und wobei aus der Drehzahl der verschiedenen Räder (80) ein Schlupfzustand ermittelt wird, wobei der Schlupfzustand eine der mindestens einen erfassten Information ist.

3. Verfahren nach Anspruch 1, wobei ein Risiko eines Schlupfzustandes oder ein Schlupfzustand der einzelnen Räder (80) der Arbeitsmaschine auf Basis von Druckdaten berechnet wird, wobei das Risiko eines Schlupfzustandes oder der Schlupfzustand eine der mindestens einen erfassten Information ist.

4. Verfahren nach einem der Ansprüche 1 bis 3, wobei ein Lenkwinkel der Arbeitsmaschine (1) erfasst wird, wobei der Lenkwinkel eine der mindestens einen erfassten Information ist.

5. Verfahren nach einem der Ansprüche 1 bis 4, wobei, wenn erkannt wird, dass Schlupfen bei einem der Räder passiert und die mindestens vier Hydromotoren (78) in der parallelen Konfiguration sind, automatisch ein Wechsel in die serielle-parallele Konfiguration ausgeführt wird, wobei der Hydromotor des schlupfenden Rades hydraulisch mit einem anderen der mindestens vier Hydromotoren (78) verbunden wird, sodass das Druckmittel von dem Hydromotor des schlupfenden Rades direkt zu dem einen anderen Hydromotor gefördert wird oder umgekehrt.

6. Verfahren nach einem der Ansprüche 1 bis 5, wobei die mindestens vier Hydromotoren (78) einen ersten Hydromotor, der ein vorderes Rad an der ersten Seite der Arbeitsmaschine antreibt, einen zweiten Hydromotor, der ein hinteres Rad an der ersten Seite der Arbeitsmaschine antreibt, einen dritten Hydromotor, der ein vorderes Rad an der zweiten Seite der Arbeitsmaschine antreibt, einen vierten Hydromotor, der ein hinteres Rad an der zweiten Seite der Arbeitsmaschine antreibt, umfassen.

7. Verfahren nach Anspruch 6, wobei der Fahrantrieb (1) weiterhin zwei Verteilungsventile (100) umfasst, wobei jedes Verteilungsventil die Verbindung zwischen den Hydromotoren, die an der gleichen Seite der Arbeitsmaschine angeordnet sind, und der Hydropumpe (2) steuert, sodass die Verteilungsventile (100) konfiguriert sind, das Umschalten zwischen der seriellen Konfiguration, der parallelen Konfiguration und der seriellen-parallelen Konfiguration zu ermöglichen, wobei die Verteilungsventile (100) unabhängig voneinander gesteuert werden.

8. Verfahren nach Anspruch 7, wobei jedes Verteilungsventil (100) mindestes zwei Steuerpositionen (100a, 100b) hat, wobei in einer ersten Steuerposition (100a) der erste bzw. der dritte Hydromotor mit dem zweiten bzw. mit dem vierten Hydromotor hydraulisch verbunden werden, wobei in einer zweiten Steuerposition (100b) der erste und der zweite, bzw. der dritte und der vierte Hydromotor mit dem gleichen durch die Hydropumpe (2) erzeugten Druck (p) versorgt werden.

9. Verfahren nach Anspruch 8, wobei die Verteilungsventile eine dritte Steuerposition (100c) haben, wobei in der dritten Steuerposition eine Druckmittelströmung von der Hydropumpe (2) jeweils zu einem des ersten oder zweiten Hydromotors bzw. zu einem des dritten oder vierten Hydromotors und eine Druckmittelströmung von dem jeweils anderen des ersten oder zweiten Hydromotors und bzw. dem anderen des dritten oder vierten Hydromotors zu der Hydropumpe (2) verhindert wird.

10. Verfahren nach einem der Ansprüche 1 bis 9, wobei die mindestens vier

11. Verfahren nach einem der Ansprüche 1 bis 10, wobei der Fahrantrieb (1) weiterhin mindestens ein variables Druckbegrenzungsventil (103) umfasst, wobei das Druckbegrenzungsventil (103) an eine Druckleitung zwischen den mindestens zwei Hydromotoren, die an der ersten oder an der zweiten Seite der Arbeitsmaschine angeordnet sind, angeschlossen ist.

12. Verfahren nach Anspruch 11, wobei der Fahrantrieb (1) weiterhin mindestens ein Nachsaugventil (104) umfasst, wobei das Nachsaugventil (104) an eine Druckleitung zwischen den mindestens zwei Hydromotoren, die an der ersten oder an der zweiten Seite der Arbeitsmaschine angeordnet sind, angeschlossen ist.

13. Verfahren nach Anspruch 11 oder 12, wobei der Öffnungsdruck des variablen Druckbegrenzungsventils (103) unter Berücksichtigung eines Bremsbefehls der Arbeitsmaschine geregelt wird.

14. Recheneinheit (32), die dazu eingerichtet ist, ein Verfahren nach einem der vorstehenden Ansprüche durchzuführen.

15. Arbeitsmaschine mit einem Fahrantrieb (1), wobei der Fahrantrieb mit einer Hydropumpe (2) zur Druckmittelversorgung von mindestens vier mit einem Abtrieb (80) koppelbaren Hydromotoren (78) des Fahrantriebes (1) versehen ist, wobei mindestens zwei Hydromotoren an einer ersten Seite der Arbeitsmaschine und mindestens zwei Hydromotoren an einer zweiten Seite der Arbeitsmaschine angeordnet sind, wobei die mindestens vier Hydromotoren jeweils an verschiedenen Rädern (80) der Arbeitsmaschine angeordnet sind, aufweisend eine Recheneinheit (32) nach Anspruch 14.

16. Computerprogramm, das eine Recheneinheit (32) veranlasst, ein Verfahren nach einem der Ansprüche 1 bis 13 durchzuführen, wenn es auf der Recheneinheit (32) ausgeführt wird.
